# EUROPEAN PATENT SPECIFICATION

(11) **EP 1 928 177 B1**
(45) Date of publication and mention of the grant of the patent: **17.02.2010**
(21) Application number: 07022868.9
(22) Date of filing: 26.11.2007
(51) Int. Cl.: H04N 7/173, H04N 5/445, H04N 5/00

(54) **Interactive service provision method and relevant device and system**
Interaktives Dienstleistungsverfahren sowie entsprechendes Gerät und System dafür
Procédé de fourniture de service interactif, dispositif et système pertinents

(30) Priority: 30.11.2006 CN 200610160840
(43) Date of publication of application: 04.06.2008
(73) Proprietor: Huawei Technologies Co., Ltd., Province 518129 (CN)
(72) Inventor: Zhao, Wenpeng, Shenzhen Guangdong Province 518129 (CN)
(74) Representative: Pfenning, Meinig & Partner GbR

(56) References cited:
- EP-A- 1 343 324
- EP-A- 1 343 325
- EP-A- 1 458 193
- WO-A-01/91415
- US-B1- 7 028 327

## Description

This application claims priority to Chinese Patent Application No. 200610160840.X, filed on November 30, 2006 and entitled "Interactive Service Provision Method and Relevant Device and System".

### Field of the Invention

The present invention relates to the field of interactive television technologies, and more particularly to an interactive service provision method and a relevant device and system. The invention is particularly suitable for providing an interactive service in a digital television service or a network television service.

### Background of the Invention

As information communication technologies advance continuously, conventional analog televisions are being replaced gradually with Digital Televisions (DTVs) and Internet Protocol Television or Interactive Personal Televisions (IPTVs). An important advantage of IPTVs and DTVs over the conventional televisions is the ability to provide services with a wider range of signification and richer contents. For example, in addition to conventional television services, web page browsing, information enquiry and the like can also be enabled, and a user is offered in television services more freedom of contents so that the user can not only watch a live television program but also select his favorite contents in an on-demand way.

In the conventional television services, interactive services associated with program contents are always popular with users. For example, a user participates in a Guess by answering questions in a program, or expresses his desire by voting on television, etc. However, because the signals of conventional televisions are transmitted in a single direction, people need to use an external channel such as phone, short message and even postal mail, to participate in an interactive service, which results in poor time efficiency and inconvenience of the interaction, and would discourage the users from using the service.

Although value-added services such as web page browsing and gaming have been provided in existing IPTV and DTV service systems, short messages or phones used in the conventional television services continue being used in the field of interactive services associated with program contents. A profound drawback of such an approach is the absence of a relatively independent interactive service operating mechanism. Interactive service information is inserted in television signals in existing interactive services based on short message or phone, that is, the interactive service information is part of television content production. Thus, it is not convenient for flexible service provision and management.

US 7028327 B1 discloses an automated control of interactivity to maintain synchronous display of an interactive content and a respective broadcast program. A program identifier from the EPG is associated with the appropriate interactive content. Supplying the program identifier retrieved from the EPG as an input, the CPE references an interactive content database and retrieve the interactive content.

EP 1458193 A discloses a television message system comprising an interactive television program guide that indicates which television programs have interactive user message features available and allows the user to respond to the interactive message.

EP 1343325 A discloses an interactive television system provided for a viewer to respond to queries within the interactive content or to control the video stream that he receives. The requests from some terminals may be delayed by a random or determined amount so that the requests are distributed over time so as to even out the load on the links.

WO 01/91415 A discloses a client side system reducing overloading of web servers by delaying the accesses of the web server.

### Summary of the Invention

The invention provides a method for providing an interactive service in IPTV and DTV systems by means of solutions, one of which is an interactive service provision method including: associating a program with interactive service information, by an interactive service management system, and updating an electronic program guide system with the interaction attribute of the program, the interactive attribute indicating that the program is associated with the interactive service information; receiving, by the electronic program guide system, a request from a set-top box, and sending program information including the interaction attribute to the set-top box; acquiring and presenting, by the set-top box, the contents of the interactive service information associated with the program according to the interaction attribute from the interactive service management system; when the program is an on-demand program, the set-top box receives all the contents of the interactive service information associated with the program at one time after requesting the contents of the interactive service information; when the program is a live program, the set-top box receives the contents of the interactive service information associated with the program in batches after requesting the contents of the interactive service information, wherein the contents received each time comprises a designation of a time for the next reception of the interactive service information, and the time for the next reception is chosen randomly or in a distributive manner within a preset range of time.

The invention also provides an interactive television system including: an interactive service management system, an electronic program guide system, a set-top box and a signaling gateway; wherein the interactive service management system is adapted to associate a program with interactive service information; to update the electronic program guide system with an interaction attribute of the program, the interaction attribute indicating that the program is associated with the interactive service information; and to send the interactive service information associated with the program upon a request from the set-top box and to receive feedback information reported from the set-top box; the electronic program guide system is adapted to receive a request from the set-top box and to send program information including the interaction attribute; and the set-top box is adapted to acquire the interactive service information associated with the program from the interactive service management system and present the interactive service information according to the interaction attribute of the program; and to collect feedback information of a user regarding the interactive service information and report the feedback information to the interactive service management system; when the program is an on-demand program, the set-top box receives all the contents of the interactive service information associated with the program at one time after requesting the contents of the interactive service information; when the program is a live program, the set-top box receives the contents of the interactive service information associated with the program in batches after requesting the contents of the interactive service information, wherein the contents received each time comprises a designation of a time for the next reception of the interactive service information, and the time for the next reception is chosen randomly or in a distributive manner within a preset range of time.

The present invention provides advantageous technical effects that in the inventive method, the interactive service information is associated with the program, and acquired by the set-top box and presented when the program is played, according to the interaction attribute of the program. In this way, the interactive service information may be acquired through the interaction attribute of the program, and thus be separated from television signals. In addition, it is possible for the user to participate in the interactive service information directly through the set-top box conveniently while watching the program, which is advantageous in facilitating and improving the efficiency of the interactive service, and in enhancing the user participation.

### Brief Descriptions of the Drawings

Figure 1 is a schematic flow chart illustrating a method for providing an interactive service according to a first embodiment of the invention.

Figure 2 is a schematic configuration diagram illustrating an interactive service management system according to a second embodiment of the invention.

Figure 3 is a schematic configuration diagram illustrating a set-top box according to a third embodiment of the invention.

Figure 4 is a schematic configuration diagram illustrating an interactive television system according to a fourth embodiment of the invention.

Figure 5 is a schematic flow chart illustrating interactive program generation according to the first embodiment of the invention.

Figure 6 is a schematic flow chart illustrating the implementation of interaction for an on-demand program according to the first embodiment of the invention.

Figure 7 is a schematic flow chart illustrating the implementation of interaction for a live program according to the first embodiment of the invention.

Figure 8 is a schematic flow chart illustrating post-processing of interactive information according to the first embodiment of the invention.

### Detailed Descriptions of the Embodiments

The invention provides an interactive service provision method and a relevant device and system. The method, device and system of the present invention will be described hereunder in detail.

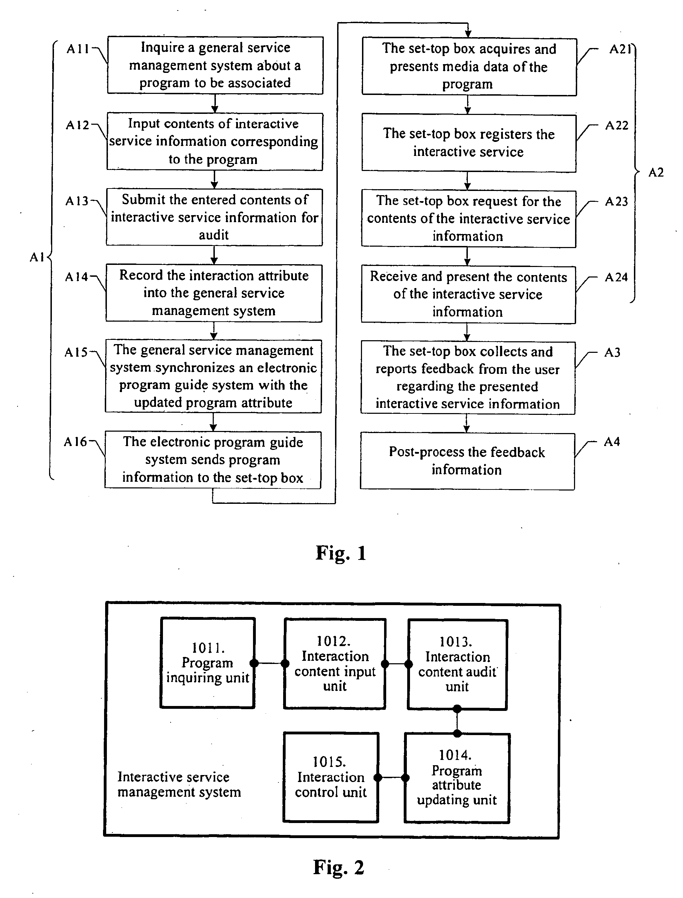

A first embodiment provides an interactive service provision method. A flow of the method is illustrated in Figure 1, and is described as below.

In process A1, a program is associated with interactive service information, and an interaction attribute of the program is sent to a set-top box. The interaction attribute indicates that the program is associated with the interactive service information.

In this process, the program with an interaction attribute is generated and the set-top box is informed of the interaction attribute of the program. A typical program attribute includes a name, a number, a starting time and an end time of the program, and a channel on which the program is carried, etc. In the invention, in order to enable a program to possess an interactive capability while providing contents, it is required to configure an interaction attribute for the program so that contents of interactive service information associated with the program may be obtained from the interaction attribute of the program. The configured interaction attribute of the program may be sent to the set-top box through a device such as an electronic program guide system or the like. Based on IPTV and DTV television system architectures, a procedure of configuring an interaction attribute for a program may involve the following processes.

In process A11, a general service management system is inquired about a program to be associated.

The so-called general service management system, i.e. a service management system in existing IPTV and DTV television systems, is mainly used to implement ordinary management on users, contents, billing, etc. An on-demand program may be inquired according to a name of the program, and a live program may be inquired according to a channel number, broadcasting time of the program, etc.

In process A12, corresponding contents of interactive service information are input for the program according to content information of the program returned from the general service management system.

The contents of the interactive service information may be edited and created in advance, and may also be created instantly according to program contents. The contents of the interactive service information may include a question type, questions, options, a presentation time period, etc., and may also include the answers in the case of a question-and-answer item.

In process A13, the input contents of interactive service information are submitted for audit.

This process may check correctness of the form and contents of the interactive service information, being advantageous in enhancing management of an interactive service and improving the controllability of the interactive service.

In process A14, after an audit confirmation is received, the attribute of the program is identified as an already associated interactive item and update the general service management system with the attribute of the program. Thus, this program changes from an ordinary program to an interactive program with the interaction attribute.

In process A 15, the general service management system synchronizes an electronic program guide system with the updated program attribute. This synchronization process may be performed instantly or periodically, and may also be performed irregularly upon a request from the electronic program guide system.

In process A16, the electronic program guide system receives a request from the set-top box, and sends program information containing an interaction attribute.

When a user requests a television program through the set-top box, the set-top box requests the program information from the electronic program guide system. In the invention, the program information sent from the electronic program guide system contains attribute information of a program, indicating whether the program is an interactive program, in addition to conventional program information URL.

For convenient unification of upward interfaces of set-top boxes, the program information sent from the electronic program guide system may further contain an address of a signaling gateway, so that the set-top box may request the interactive service information and report feedback information subsequently by means of this address of the signaling gateway.

In process A2, the set-top box acquires and presents the contents of the program and the interactive service information associated with the program according to the program information sent from the electronic program guide system.

In this process, in addition to conventionally playing the program contents, the set-top box also provides the user with the corresponding interactive service information when the program has an interaction attribute. In order to ensure the timely playing of a user-requested program, the set-top box may adopt an approach of providing firstly the program and then the interactive service information. This approach particularly includes the processes as follows.

In process A21, media data of the program is acquired and presented according to a program playing flow. This process may be performed according to an existing program playing flow.

In process A22, an interactive service is registered when it is determined that the program has already been associated with interactive service information according to the program attribute of the played program. The right of the user and the interaction attribute of the program, etc. may be judged in this registration process, which is advantageous for the management layer to control the providing of the interactive service.

In process A23, the contents of the interactive service information is requested when the registration is successful.

In process A24, the contents of the interactive service information are received and presented.

The interactive service information may be received and presented in different ways depending on different program types.

In the case that the interactive program is an on-demand program, the set-top box may receive the whole contents of the interactive service information associated with the program at one time after requesting the contents of the interactive service information, and then present the received contents piece by piece according to the presentation times in the contents. For example, the contents are displayed on a play device in a form of transparent or nontransparent rolling captions.

In the case that the interactive program is a live program, it is impossible to obtain all the contents of the interactive service information at one time since the live program is a consecutive time stream. The set-top box may receive and present the contents of the interactive service information associated with the program in batches. Contents received each time include a designation of a time for the next reception, and subsequent contents of the interactive service information are received at the time for the next reception. In order to avoid concurrent accesses from multiple users, the designated time for the next reception may be chosen randomly or in a distributive manner within a preset range of time. Distribution of the time for reception preferably ranges from 1 to 5 minutes.

In process A3, the set-top box collects and reports feedback information from the user regarding the presented interactive service information.

The user may input feedback regarding the interactive service information presented by the set-top box through a button on a remote controller of the set-top box, for example in selecting an answer to a question, participating in voting, etc. In order to avoid concurrent accesses from multiple users, the set-top box may report the feedback information from the user after a random delay.

In the case that information is transported through a signaling gateway, the set-top box may send the feedback directly to the signaling gateway according to the address of the signaling gateway, and also may send the feedback to the signaling gateway through a third-part information feedback system, such as a wire or wireless communication system.

In process A4, data statistics and analysis are made on the feedback information reported by the set-top box according to the program associated with the contents of the interactive service information and/or program time.

This process is to post-process the feedback information of the user, thereby achieving extended functions based upon the statistic data, such as lucky draw or analysis of an audience group and a satisfaction degree of the program based upon the user feedback information.

It may be seen from the above embodiment that the set-top box determines and acquires the interactive information according to the interaction attribute specific to the program. Therefore there is no need to insert interactive information into television signals, so that the interactive service may be separated from the television content, and the interactive information may be sent to the set-top box by various wire or wireless transmission means. For example, in an IPTV service, the interactive information may be sent through an independent IP channel, and in a DTV service, the interactive information may be sent through a cable based data channel.

Embodiments of the inventive device and system will be described hereunder in detail.

A second embodiment provides an interactive service management system. As shown in Figure 2, the interactive service management system includes a program inquiring unit 1011, an interaction content input unit 1012, an interaction content audit unit 1013, a program attribute updating unit 1014 and an interaction control unit 1015.

The program inquiring unit 1011 is adapted to inquire of a general service management system about a program to be associated.

The interaction content input unit 1012 is adapted to input contents of interactive service information corresponding to the program according to program content information obtained by the program inquiring unit 1011 from the general service management system.

The interaction content audit unit 1013 is adapted to submit the contents of the interactive service information input by the interaction content input unit 1012 for audit, and after receiving an audit confirmation, to instruct the program attribute updating unit 1014 to update a program attribute.

The program attribute updating unit 1014 is adapted to configure an interaction attribute for the program, in other words, to identify the program attribute of the program as an already associated interactive item and to update the general service management system with the program attribute depending on the program associated with the contents of the interactive service information input by the interaction content input unit 1012.

The interaction control unit 1015 is adapted to send the interactive service information associated with the program upon a request from a set-top box and to receive feedback information reported from the set-top box.

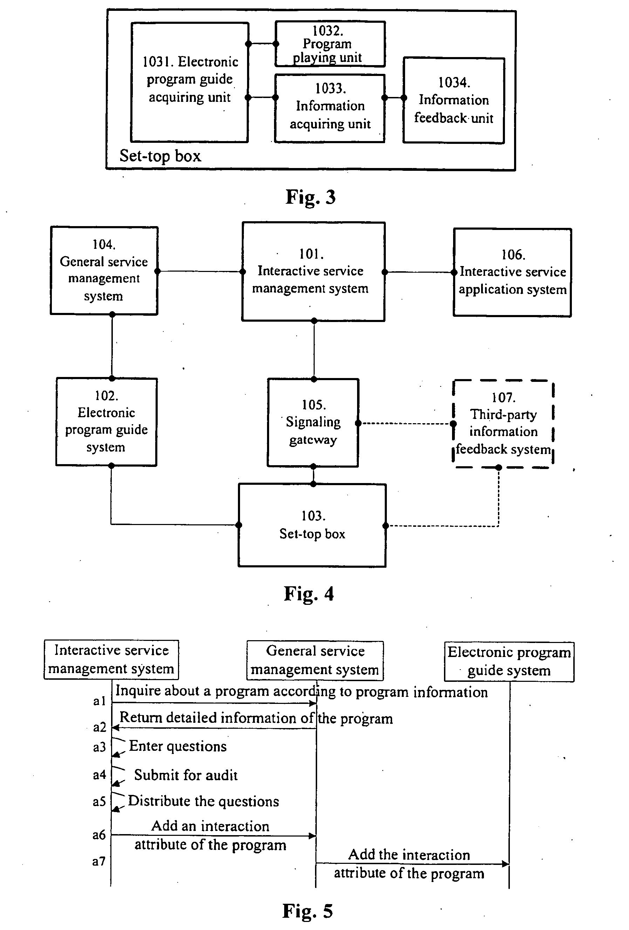

A third embodiment provides a set-top box. As illustrated in Figure 3, the set-top box includes an electronic program guide acquiring unit 1031, a program playing unit 1032, an information acquiring unit 1033 and an information feedback unit 1034.

The electronic program guide acquiring unit 1031 is adapted to send a request to an electronic program guide system and to receive program information sent from the electronic program guide system.

The program playing unit 1032 is adapted to, following a program playing flow, acquire and present media data of a program according to the program information received by the electronic program guide acquiring unit 1031.

The information acquiring unit 1033 is adapted to determine that the program has already been associated with interactive service information according to an interaction attribute contained in the program information received by the electronic program guide acquiring unit 1031, and to acquire and present the interactive service information associated with the program from an interactive service management system.

The information feedback unit 1034 is adapted to collect feedback information from a user regarding the interactive service information, and to report the feedback information to the interactive service management system.

A fourth embodiment provides an interactive television system. As shown in Figure 4, the interactive television system includes an interactive service management system 101, an electronic program guide system 102, a set-top box 103, a general service management system 104, a signaling gateway 105 and an interactive service application system 106.

The interactive service management system 101 is adapted to associate a program with interactive service information; to update the electronic program guide system 102 with an interaction attribute of the program through the general service management system 104, the interaction attribute indicating that the program is associated with the interactive service information; and to send the interactive service information associated with the program upon a request from the set-top box 103 and receive feedback information reported from the set-top box 103. The interactive service management system in this embodiment may be constructed as in the second embodiment.

The electronic program guide system 102 is adapted to receive a request from the set-top box 103 and to send program information including a program attribute and an address of a signaling gateway.

The set-top box 103 is adapted to send a request to the electronic program guide system 102 and to receive the program attribute from the electronic program guide system 102; to acquire and present the interactive service information associated with the program from the interactive service management system 101 through the signaling gateway 105 according to the interaction attribute of the program; and to collect feedback of the user regarding the interactive service information and to report the feedback to the interactive service management system 101 through the signaling gateway 105. The set-top box in this embodiment may be constructed as in the third embodiment.

The general service management system 104 is adapted to synchronize instantly or periodically the electronic program guide system 102 with the program attribute updated by the interactive service management system 101.

The signaling gateway 105 is adapted to, functioning as an interface between the set-top box 103 and the interactive service management system 101, implement message and signaling adaptation between the two components.

The interactive service application system 106 is adapted to acquire the feedback information from the interactive service management system 101 and to make data statistics and analysis depending on the associated program and/or program time.

Further, the inventive interactive television system may also include a third-party information feedback system 107. Information may be transported between the set-top box 103 and the signaling gateway 105 directly or through the third-party information feedback system 107. In Figure 4, the third-party information feedback system 107 and the connection relationship between the third-party information feedback system 107 and other components are depicted with broken lines.

For better understanding the invention, a specific procedure of implementing the inventive method in the inventive system will be described hereunder in detail by way of an example for providing an interactive question-and-answer service. The procedure includes the three phases as follows.

In phase 1, an interactive program is generated. As shown in Figure 5, this phase includes the processes as follows.

In process a1, the interactive service management system inquires the general service management system about a program according to input program information.

In process a2, the general service management system returns detailed information of the inquired program to the interactive service management system.

In process a3, the interactive service management system inputs a question type, the questions, options, the answers and the presentation time period. For a live program, the time for starting presentation may be the current time by default.

For convenient management of a question association process, the interactive service management system may identify a question in different phases of the association process with different states. An initially input question may be set in a draft state.

In process a4, upon completion of inputting the question, the interactive service management system submits the question for audit, and changes the state of the question from the draft state to an audit state.

In process a5, upon passing the audit, the question is associated with the program and thus may be invoked. The interactive service management system changes the state of the question from the audit state to a distribution state.

In process a6, the interactive service management system adds an interaction attribute into the program attribute of the program to change the program from an ordinary program to an interactive program, and updates the general service management system with the updated program attribute.

In process a7, the general service management system synchronizes periodically the electronic program guide system with the updated program attribute. After the electronic program guide system is synchronized with the interaction attribute of the program, the user may obtain question contents associated with the program upon requesting the program.

In phase 2, an interactive flow is executed.

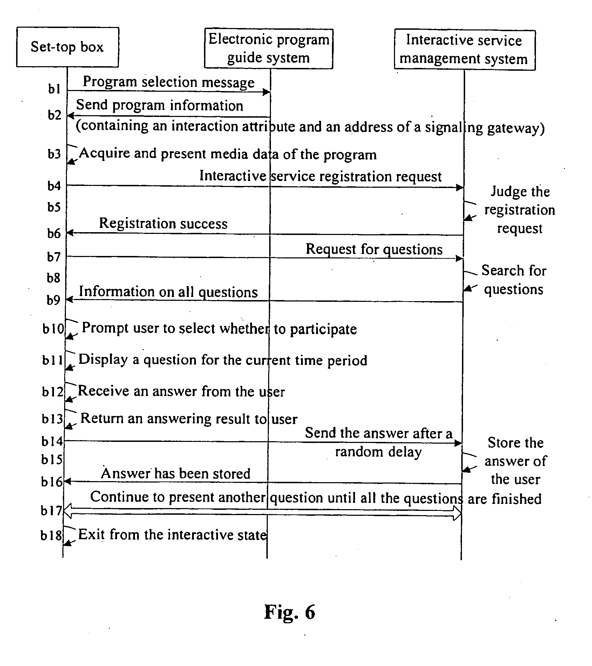

For an on-demand program, the flow is executed as shown in Figure 6, including the processes as follows.

In process b1, the set-top box receives an instruction from the user and sends to the electronic program guide system a message requesting a program for play. It is supposed that the program is an interactive program.

In process b2, the electronic program guide system searches for the information of the requested program and determines that the program is an interactive program. In addition to conventional information, the sent program information also contains the interaction attribute indicating that the program is an interactive program and the address of the signaling gateway.

In process b3, the set-top box, following an existing program requesting flow, acquires and presents media data of the program according to the conventional contents in the program information.

In process b4, the set-top box determines that the program is an interactive program according to the interaction attribute of the program, and initiates an interactive service registration request to the interactive service management system through the signaling gateway.

In this example, all the information transmissions between the set-top box and the interactive service management system are implemented through the signaling gateway, so that various set-top boxes may present a uniform interface to the interactive service management system, descriptions of which will not be repeated below. In this registration process, right of the user and the interaction attribute of the program, etc. may be judged, which is advantageous for a management layer to control the providing of the interactive service.

In process b5, the interactive service management system judges the right of the user, the interaction attribute of the program and the current state of the question state, etc. to determine whether the interactive service is supported.

In process b6, the interactive service management system returns a registration success message to the set-top box.

In process b7, the set-top box initiates a request to the interactive service management system for questions of the current program.

In process b8, the interactive service management system searches for questions and determines that the current program is an on-demand program according to the program information.

In process b9, the interactive service management system sends the information on all the questions to the set-top box. The information includes interactive prompt information, the type of a question, the question, options and the answer, as well as the starting time and ending time of the question, and the user answering overtime, etc.

In process b10, according to the starting times of the questions, the set-top box displays a rolling caption upon arrival of a starting time of the first question, prompting the user to select whether to participate in question answering.

In process b11, the set-top box receives from the user an instruction of confirmation on starting question answering, and displays a question for the current time period. Typically, the user may send the instruction of confirmation on participating in the interactive service through a specific button on a remote controller of the set-top box.

In process b12, the set-top box receives selection of an answer to the current question by the user, and the user may send information on the selection of the answer through a corresponding button on the remote controller of the set-top box.

In process b13, the set-top box determines whether the answer of the user is correct and returns a question answering result to the user. Of course, this process may be omitted if the question information contains no answer or no answer shall be opened to the user or in the case of a Voting service.

In process b14, the set-top box sends the answer to the interactive service management system after a random delay.

In process b15, the interactive service management system stores the answer of the user.

In process b16, the interactive service management system informs the set-top box that the answer of the user is stored.

In process b17, the set-top box continues to present a question to the user until all the questions are finished.

In process b18, the set-top box exits from the interactive state. Of course, the user may exit from the interactive state with his own initiative by sending an instruction to the set-top box at any time during the interactive flow.

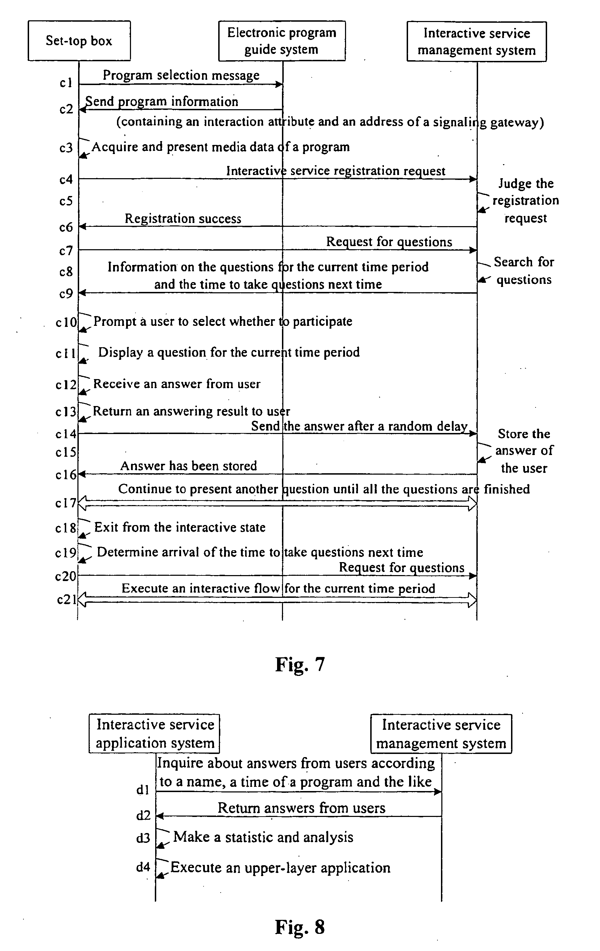

For a live program, the execution flow is substantially the same as that for the on-demand program, except that the interactive service management system sends a part of the questions each time and designates the time for taking questions next time, but not sends all the questions to the set-top box at one time. As shown in Figure 7, the execution flow for the live program includes the processes as follows.

Processes c1 to c 7 are identical to processes b1 to b7.

In process c8, the interactive service management system searches for questions and determines that the current program is a live program according to the program information.

In process c9, the interactive service management system sends to the set-top box the question information for the current time period, and also designates the time for the set-top box to take questions next time. In order to avoid concurrent accesses from multiple users, the interactive service management system may determine a time for the set-top box to take questions next time within a range from 1 to 5 minutes.

In process c10, according to starting times of questions for the current time period, the set-top box displays a rolling caption upon arrival of a starting time of the first question, prompting the user to select whether to participate in question answering.

Processes c11 to c 16 are identical to processes b11 to b 16.

In process c17, the set-top box continues to present a question to the user until all the questions for the current time period are finished.

In process c18, the set-top box exits from the interactive state.

In process c19, the set-top box determines that the time to take questions arrives.

In process c20, the set-top box initiates to the interactive service management system a request for requesting questions for the current time period.

In process c21, an interactive flow is executed for the current time period.

In phase 3, interactive information is post-processed. As shown in Figure 8, this phase includes the processes as follows.

In process d1, the interactive service application system inquires the interactive service management system about the answers to the questions associated with a program collected from users according to at least one of the number, the title or the time period of the program.

In process d2, the interactive service management system sends to the interactive service application system its stored answers as fed back from users.

In process d3, the interactive service application system makes a statistic and analysis on the user data.

In process d4, the interactive service application system executes an upper-layer application such as a lucky drawing or generates an analysis statement according to the statistic data.

## Claims

1. An interactive service provision method, comprising:
associating a program with interactive service information, by an interactive service management system, and updating an electronic program guide system with the interaction attribute of the program, the interactive attribute indicating that the program is associated with the interactive service information;
receiving, by the electronic program guide system, a request from a set-top box, and sending program information including the interaction attribute to the set-top box;
acquiring and presenting, by the set-top box, the contents of the interactive service information associated with the program according to the interaction attribute from the interactive service management system
**characterized in that**:
when the program is an on-demand program, the set-top box receives all the contents of the interactive service information associated with the program at one time after requesting the contents of the interactive service information;
when the program is a live program, the set-top box receives the contents of the interactive service information associated with the program in batches after requesting the contents of the interactive service information, wherein the contents received each time comprises a designation of a time for the next reception of the interactive service information, and the time for the next reception is chosen randomly or in a distributive manner within a preset range of time.

2. The interactive service provision method according to claim 1, further comprising:
collecting and reporting, by the set-top box, feedback information of a user regarding the interactive service information; and
making data statistics and analysis on the feedback information reported from the set-top box according to the program associated with the interactive service information and/or program time.

3. The interactive service provision method according to claim2, wherein the set-top box sends the feedback information to the signaling gateway directly or through a third-party information feedback system.

4. The interactive service provision method according to claim 2, wherein after collecting the feedback information from the user, the set-top box reports the feedback information after a random delay.

5. The interactive service provision method according to any one of claims 1-4, wherein the associating the program with the interactive service information comprises:
inquiring about the program to be associated;
inputting corresponding contents of the interactive service information for the program according to content information of the inquired program;
configuring the interaction attribute for the program.

6. The interactive service provision method according to claim 5, wherein updating the electronic program guide system with the interaction attribute of the program comprises:
updating a general service management system with the interaction attribute; and
synchronizing instantly or periodically, by the general service management system, the electronic program guide system with the updated program attribute.

7. The interactive service provision method according to claim 5, wherein after inputting the corresponding contents of the interactive service information for the program and before configuring the interaction attribute for the program, the method further comprises:
submitting the input contents of the interactive service information for audit.

8. The interactive service provision method according to claim 1, wherein the acquiring and presenting, by the set-top box, the contents of the interactive service information associated with the program comprises:
acquiring and presenting media data of the program according to a program playing flow;
determining that the program has already been associated with the interactive service information according to the interaction attribute of the program and registering for an interactive service;
requesting contents of the interactive service information when the registering is successful; and
receiving and presenting the contents of the interactive service information.

9. An interactive television system, comprising an interactive service management system (101), an electronic program guide system (102) and a set-top box (103); wherein
the interactive service management system (101) is adapted to associate a program with interactive service information; to update the electronic program guide system (102) with an interaction attribute of the program, the interaction attribute indicating that the program is associated with the interactive service information; and to send the interactive service information associated with the program upon a request from the set-top box (103) and to receive feedback information reported from the set-top box (103);
the electronic program guide system (102) is adapted to receive a request from the set-top box (103) and to send program information including the interaction attribute; and
the set-top box (103) is adapted to acquire the interactive service information associated with the program from the interactive service management system (101) and present the interactive service information according to the interaction attribute of the program; and to collect feedback information of a user regarding the interactive service information and report the feedback information to the interactive service management system (101);
**characterized in that :**
when the program is an on-demand program, the set-top box receives all the contents of the interactive service information associated with the program at one time after requesting the contents of the interactive service information;
when the program is a live program, the set-top box receives the contents of the interactive service information associated with the program in batches after requesting the contents of the interactive service information, wherein the contents received each time comprises a designation of a time for the next reception of the interactive service information, and the time for the next reception is chosen randomly or in a distributive manner within a preset range of time

10. The interactive television system according to claim 9, further comprising an interactive service application system (106), wherein the interactive service application system (106) is adapted to acquire, from the interactive service management system (101), the feedback information reported from the set-top box (103) and to make data statistics and analysis according to the program associated with the interactive service information and/or program time.

11. The interactive television system according to claim 9, further comprising a third-party information feedback system (107), wherein the third-party information feedback system (107) is adapted to forward the feedback information reported from the set-top box (103) to the signaling gateway (105).

12. The interactive television system according to any one of claims 9-11, further comprising a general service management system (104), wherein the general service management system (104) is adapted to synchronize instantly or periodically the electronic program guide system with a program attribute updated by the interactive service management system (101).

## Patentansprüche

1. Verfahren zur Bereitstellung interaktiver Dienste, mit den folgenden Schritten:
ein Verwaltungssystem interaktiver Dienste assoziiert ein Programm mit Informationen interaktiver Dienste und ein elektronisches Programmanleitungssystem wird mit dem Interaktionsattribut des Programms aktualisiert, wobei das interaktive Attribut anzeigt, dass das Programm mit den Informationen interaktiver Dienste assoziiert ist;
das elektronische Programmanleitungssystem empfängt eine Anforderung von einer Set-Top-Box und Programminformationen, die das Interaktionsattribut umfassen, werden zu der Set-Top-Box gesendet;
die Set-Top-Box beschafft und präsentiert die Inhalte der mit dem Programm assoziierten Informationen interaktiver Dienste gemäß dem Interaktionsattribut aus dem Verwaltungssystem interaktiver Dienste,
**dadurch gekennzeichnet, dass**
wenn das Programm ein On-Demand-Programm ist, die Set-Top-Box alle Inhalte der mit dem Programm assoziierten Informationen interaktiver Dienste zu einem Zeitpunkt nach dem Anfordern der Inhalte der Informationen interaktiver Dienste empfängt;
wenn das Programm ein Live-Programm ist, die Set-Top-Box die Inhalte der mit dem Programm assoziierten Informationen interaktiver Dienste nach dem Anfordern der Inhalte der Informationen interaktiver Dienste in Schüben empfängt, wobei die jedes Mal empfangenen Inhalte eine Kennzeichnung eines Zeitpunkts für den nächsten Empfang der Informationen interaktiver Dienste umfassen und der Zeitpunkt für den nächsten Empfang zufällig oder auf verteilte Weise in einem voreingestellten Zeitbereich gewählt wird.

2. Verfahren zur Bereitstellung interaktiver Dienste nach Anspruch 1, ferner mit den folgenden Schritten:
Sammeln und Melden von Rückmeldungsinformationen eines Benutzers in Bezug auf die Informationen interaktiver Dienste durch die Set-Top-Box; und
Erstellen von Datenstatistiken und Analyse über die von der Set-Top-Box gemeldeten Rückmeldungsinformationen gemäß dem mit den Informationen interaktiver Dienste assoziierten Programm und/oder der Programmzeit.

3. Verfahren zur Bereitstellung interaktiver Dienste nach Anspruch 2, wobei die Set-Top-Box die Rückmeldungsinformationen direkt oder durch ein Informationsrückmeldungssystem Dritter zu dem Signalisierungs-Gateway sendet.

4. Verfahren zur Bereitstellung interaktiver Dienste nach Anspruch 2, wobei nach dem Sammeln der Rückmeldungsinformationen von dem Benutzer die Set-Top-Box die Rückmeldungsinformationen nach einer zufälligen Verzögerung meldet.

5. Verfahren zur Bereitstellung interaktiver Dienste nach einem der Ansprüche 1-4, wobei das Assoziieren des Programms mit den Informationen interaktiver Dienste Folgendes umfasst:
Abfragen über das zu assoziierende Programm;
Eingeben entsprechender Inhalte der Informationen interaktiver Dienste für das Programm gemäß Inhaltsinformationen des abgefragten Programms;
Konfigurieren des Interaktionsattributs für das Programm.

6. Verfahren zur Bereitstellung interaktiver Dienste nach Anspruch 5, wobei das Aktualisieren des elektronischen Programmanleitungssystems mit dem Interaktionsattribut des Programms Folgendes umfasst:
Aktualisieren eines allgemeinen Dienstverwaltungssystems mit dem Interaktionsattribut; und
augenblickliches oder periodisches Synchronisieren des elektronischen Programmanleitungssystems mit dem aktualisierten Programmattribut durch das allgemeine Dienstverwaltungssystem.

7. Verfahren zur Bereitstellung interaktiver Dienste nach Anspruch 5, wobei nach dem Eingeben der entsprechenden Inhalte der Informationen interaktiver Dienste für das Programm und vor dem Konfigurieren des Interaktionsattributs für das Programm das Verfahren ferner Folgendes umfasst:
Übermitteln der eingegebenen Inhalte der Informationen interaktiver Dienste für Auditierung.

8. Verfahren zur Bereitstellung interaktiver Dienste nach Anspruch 1, wobei das Beschaffen und Präsentieren der Inhalte der mit dem Programm assoziierten Informationen interaktiver Dienste durch die Set-Top-Box Folgendes umfasst:
Beschaffen und Präsentieren von Mediendaten des Programms gemäß einem Programmwiedergabeablauf;
Bestimmen, dass das Programm bereits mit den Informationen interaktiver Dienste assoziiert worden ist, gemäß dem Interaktionsattribut des Programms und Registrieren für einen interaktiven Dienst;
Anfordern von Inhalten von Informationen interaktiver Dienste, wenn das Registrieren erfolgreich ist; und
Empfangen und Präsentieren der Inhalte der Informationen interaktiver Dienste.

9. Interaktives Fernsehsystem, das ein Verwaltungssystem interaktiver Dienste (101), ein elektronisches Programmanleitungssystem (102) und eine Set-Top-Box (103) umfasst; wobei
das Verwaltungssystem interaktiver Dienste (101) dafür ausgelegt ist, ein Programm mit Informationen interaktiver Dienste zu assoziieren; das elektronische Programmanleitungssystem (102) mit einem Interaktionsattribut des Programms zu aktualisieren, wobei das Interaktionsattribut anzeigt, dass das Programm mit den Informationen interaktiver Dienste assoziiert ist; und die mit dem Programm assoziierten Informationen interaktiver Dienste bei einer Anforderung von der Set-Top-Box (103) zu senden und von der Set-Top-Box (103) gemeldete Rückmeldungsinformationen zu empfangen;
das elektronische Programmanleitungssystem (102) dafür ausgelegt ist, eine Anforderung von der Set-Top-Box (103) zu empfangen und Programminformationen, die das Interaktionsattribut umfassen, zu senden; und
die Set-Top-Box (103) dafür ausgelegt ist, die mit dem Programm assoziierten Informationen interaktiver Dienste von dem Verwaltungssystem interaktiver Dienste (101) zu beschaffen und die Informationen interaktiver Dienste gemäß dem Interaktionsattribut des Programms zu präsentieren; und Rückmeldungsinformationen eines Benutzers in Bezug auf die Informationen interaktiver Dienste zu sammeln und die Rückmeldungsinformationen an das Verwaltungssystem interaktiver Dienste (101) zu melden;
**dadurch gekennzeichnet, dass**
wenn das Programm ein On-Demand-Programm ist, die Set-Top-Box alle Inhalte der mit dem Programm assoziierten Informationen interaktiver Dienste zu einem Zeitpunkt nach dem Anfordern der Inhalte der Informationen interaktiver Dienste empfängt;
wenn das Programm ein Live-Programm ist, die Set-Top-Box die Inhalte der mit dem Programm assoziierten Informationen interaktiver Dienste nach dem Anfordern der Inhalte der Informationen interaktiver Dienste in Schüben empfängt, wobei die jedes Mal empfangenen Inhalte eine Kennzeichnung eines Zeitpunkts für den nächsten Empfang der Informationen interaktiver Dienste umfassen und der Zeitpunkt für den nächsten Empfang zufällig oder auf verteilte Weise in einem voreingestellten Zeitbereich gewählt wird.

10. Interaktives Fernsehsystem nach Anspruch 9, ferner mit einem Anwendungssystem interaktiver Dienste (106), wobei das Anwendungssystem interaktiver Dienste (106) dafür ausgelegt ist, von dem Verwaltungssystem interaktiver Dienste (101) die von der Set-Top-Box (103) gemeldeten Rückmeldeinformationen zu beschaffen und Datenstatistiken und Analyse gemäß dem mit den Informationen interaktiver Dienste assoziierten Programm und/oder der Programmzeit zu erstellen.

11. Interaktives Fernsehsystem nach Anspruch 9, ferner mit einem Informationsrückmeldungssystem Dritter (107), wobei das Informationsrückmeldungssystem Dritter (107) dafür ausgelegt ist, die von der Set-Top-Box (103) gemeldeten Rückmeldungsinformationen zu dem Signalisierungs-Gateway (105) weiterzuleiten.

12. Interaktives Fernsehsystem nach einem der Ansprüche 9-11, ferner mit einem allgemeinen Dienstverwaltungssystem (104), wobei das allgemeine Dienstverwaltungssystem (104) dafür ausgelegt ist, das elektronische Programmanleitungssystem augenblicklich oder periodisch mit einem durch das Verwaltungssystem interaktiver Dienste (101) aktualisierten Programmattribut zu synchronisieren.

## Revendications

1. Procédé de fourniture de service interactif, comprenant :
l'association d'un programme à des informations de service interactif, par un système de gestion de service interactif, et l'actualisation d'un système de guide de programme électronique avec l'attribut d'interaction du programme, l'attribut d'interaction indiquant que le programme est associé aux informations de service interactif ;
la réception, par le système de guide de programme électronique, d'une requête d'un boîtier décodeur, et l'envoi des informations de programme comportant l'attribut d'interaction au boîtier décodeur ;
l'acquisition et la présentation, par le boîtier décodeur, du contenu des informations de service interactif associées au programme conformément à l'attribut d'interaction provenant du système de gestion de service interactif,
**caractérisé en ce que** :
quand le programme est un programme à la demande, le boîtier décodeur reçoit la totalité du contenu des informations de service interactif associées au programme à une certaine heure après la requête du contenu des informations de service interactif ;
quand le programme est un programme en direct, le boîtier décodeur reçoit le contenu des informations de service interactif associées au programme en lots après la requête du contenu des informations de service interactif, le contenu reçu à chaque fois comprenant la désignation d'une heure de prochaine réception des informations de service interactif, et l'heure de prochaine réception est choisie de façon aléatoire ou distribuée dans une plage de temps préréglée.

2. Procédé de fourniture de service interactif selon la revendication 1, comprenant en outre :
la collecte et la communication, par le boîtier décodeur, d'informations de retour d'un utilisateur concernant les informations de service interactif ; et
l'établissement de statistiques et d'une analyse de données sur les informations de retour communiquées par le boîtier décodeur conformément au programme associé aux informations de service interactif et/ou temps de programme.

3. Procédé de fourniture de service interactif selon la revendication 2, dans lequel le boîtier décodeur envoie les informations de retour à la passerelle de signalisation directement ou par le biais d'un système tiers de retour d'informations.

4. Procédé de fourniture de service interactif selon la revendication 2, dans lequel après la collecte des informations de retour de l'utilisateur, le boîtier décodeur communique les informations de retour après un retard aléatoire.

5. Procédé de fourniture de service interactif selon l'une quelconque des revendications 1 à 4, dans lequel l'association du programme aux informations de service interactif comprend :
une demande de renseignements sur le programme à associer ;
l'entrée du contenu correspondant des informations de service interactif du programme conformément aux informations de contenu du programme objet de la demande de renseignements ;
la configuration de l'attribut d'interaction du programme.

6. Procédé de fourniture de service interactif selon la revendication 5, dans lequel l'actualisation du système de guide de programme électronique avec l'attribut d'interaction du programme comprend :
l'actualisation d'un système de gestion de service général avec l'attribut d'interaction ; et
la synchronisation instantanée ou périodique, par le système de gestion de service général, du système de guide de programme électronique avec l'attribut de programme actualisé.

7. Procédé de fourniture de service interactif selon la revendication 5, dans lequel après l'entrée du contenu correspondant des informations de service interactif du programme et avant la configuration de l'attribut d'interaction du programme, le procédé comprend en outre :
la soumission du contenu d'entrée des informations de service interactif en vue de sa vérification.

8. Procédé de fourniture de service interactif selon la revendication 1, dans lequel
l'acquisition et la présentation, par le boîtier décodeur, du contenu des informations de service interactif associées au programme comprennent :
l'acquisition et la présentation de données de média du programme en fonction d'un flux de reproduction de programmes ;
la détermination que le programme a déjà été associé aux informations de service interactif en fonction de l'attribut d'interaction du programme et l'enregistrement d'un service interactif ;
la requête du contenu des informations de service interactif quand l'enregistrement est réussi ; et
la réception et la présentation du contenu des informations de service interactif.

9. Système de télévision interactif, comprenant un système de gestion de service interactif (101), un système de guide de programme électronique (102) et un boîtier décodeur (103) ; dans lequel
le système de gestion de service interactif (101) est adapté pour associer un programme à des informations de service interactif ; actualiser le système de guide de programme électronique (102) avec un attribut d'interaction du programme, l'attribut d'interaction indiquant que le programme est associé aux informations de service interactif ; et envoyer les informations de service interactif associées au programme sur requête par le boîtier décodeur (103) et recevoir des informations de retour communiquées par le boîtier décodeur (103) ;
le système de guide de programme électronique (102) est adapté pour recevoir une requête du boîtier décodeur (103) et envoyer des informations de programme comportant l'attribut d'interaction ; et
le boîtier décodeur (103) est adapté pour acquérir les informations de service interactif associées au programme à partir du système de gestion de service interactif (101) et présenter les informations de service interactif conformément à l'attribut d'interaction du programme ; et collecter des informations de retour d'un utilisateur concernant les informations de service interactif et communiquer les informations de retour au système de gestion de service interactif (101);
**caractérisé en ce que** :
quand le programme est un programme à la demande, le boîtier décodeur reçoit la totalité du contenu des informations de service interactif associées au programme à une certaine heure après la requête du contenu des informations de service interactif ;
quand le programme est un programme en direct, le boîtier décodeur reçoit le contenu des informations de service interactif associées au programme en lots après la requête du contenu des informations de service interactif, le contenu reçu à chaque fois comprenant la désignation d'une heure de prochaine réception des informations de service interactif, et l'heure de prochaine réception est choisie de façon aléatoire ou distribuée dans une plage de temps préréglée.

10. Système de télévision interactif selon la revendication 9, comprenant en outre un système d'application de service interactif (106), dans lequel le système d'application de service interactif (106) est adapté pour acquérir, à partir du système de gestion de service interactif (101), les informations de retour communiquées par le boîtier décodeur (103) et établir des statistiques et une analyse de données conformément au programme associé aux informations de service interactif et/ou temps de programme.

11. Système de télévision interactif selon la revendication 9, comprenant en outre un système tiers de retour d'informations (107) dans lequel le système tiers de retour d'informations (107) est adapté pour transmettre les informations de retour communiquées par le boîtier décodeur (103) à la passerelle de signalisation (105).

12. Système de télévision interactif selon l'une quelconque des revendications 9 à 11, comprenant en outre un système de gestion de service général (104), dans lequel le système de gestion de service général (104) est adapté pour synchroniser instantanément ou périodiquement le système de guide de programme électronique avec un attribut de programme actualisé par le système de gestion de service interactif (101).
